# EUROPÄISCHE PATENTANMELDUNG

(11) **EP 1 845 273 A2**
(43) Veröffentlichungstag der Anmeldung: **17.10.2007**
(21) Anmeldenummer: 07006762.4
(22) Anmeldetag: 31.03.2007
(51) Int. Cl.: F16D 1/06

(54) **Verbindungsanordnung zur drehfesten Verbindung zweier Bauteile im Antriebsstrang eines Fahrzeugs**

(30) Priorität: 12.04.2006 DE 102006017167
(71) Anmelder: ZF FRIEDRICHSHAFEN AG, 88046 Friedrichshafen (DE)
(72) Erfinder: Ludsteck, Sven, 97702 Münnerstadt (DE); Manger, Alexander, 97508 Grettstadt (DE); Schierling, Bernhard, 97273 Kürnach (DE); Weth, Jürgen, 97424 Niederwerm (DE)

(57) **Zusammenfassung**

Eine Verbindungsanordnung zur drehfesten Verbindung zweier Bauteile (24, 40) in einem Antriebsstrang eines Fahrzeugs zur gemeinsamen Drehung um eine Drehachse (A) umfasst an einem ersten der beiden Bauteile (24, 40) eine Innenverzahnung (34) und an einem zweiten der beiden Bauteile (24, 40) eine im Verbindungszustand mit der Innenverzahnung (34) in mit Umfangsbewegungsspiel behaftetem Kämmeingriff stehende Außenverzahnung (42) sowie eine zwischen dem ersten Bauteil (24) und dem zweiten Bauteil (40) wirkende Bremsanordnung (54), welche einer Relativdrehung der beiden Bauteile (24, 40) im Bereich des Umfangsbewegungsspiels entgegenwirkt.

## Beschreibung

Die vorliegende Erfindung betrifft eine Verbindungsanordnung, mit welcher zwei Bauteile eines Anriebsstrangs eines Fahrzeugs drehfest und somit zur Drehmomentübertragung miteinander verbunden werden können.

Um in Antriebssträngen von Fahrzeugen die auftretenden Antriebskräfte bzw. Drehmomente zwischen einem Antriebsaggregat und Antriebsrädern übertragen zu können, ist es bekannt, verschiedene Komponenten eines derartigen Antriebsstrangs durch Verzahnungen miteinander zu koppeln. Hierzu werden insbesondere so genannte Stirnverzahnungen eingesetzt, also Verzahnungen, bei welchen an einem ersten der miteinander zu koppelnden Bauteile eine Innenverzahnung mit im Wesentlichen nach radial inneren gerichteten Zähnen vorgesehen ist und an einem zweiten der beiden Bauteile eine Außenverzahnung mit im Wesentlichen nach radial außen gerichteten Zähnen vorgesehen ist. Diese beiden Verzahnungen werden beim Zusammenfügen eines Antriebsstrangs dann im Wesentlichen durch axiales Aufeinander zu bewegen bzw. ineinander Einschieben in den eine Drehmomentübertragung zulassenden Kämmeingriff gebracht.

Um diesen Kämmeingriff herstellen zu können, müssen die beiden miteinander zu koppelnden Verzahnungen mit einem gewissen Bewegungsspiel ausgebildet sein, welches das ineinander Einschieben zulässt. Auch muss berücksichtigt werden, dass gewisse Fertigungstoleranzen bei der Herstellung der beiden Bauteile bzw. der Verzahnungen auftreten. Um zu verhindern, dass die Verzahnungen mit die Herstellung des Kämmeingriffs nicht zulassendem Übermaß ausgebildet werden, muss unter Berücksichtigung der zu erwartenden Fertigungstoleranzen ebenfalls ein gewisses Bewegungsspiel der Verzahnungen bezüglich einander bereitgestellt werden. Dieses Bewegungsspiel, insbesondere ein Umfangsbewegungsspiel der in Kämmeingriff stehenden Verzahnungen, führt jedoch vor allem bei Lastwechseln in einem Antriebsstrang zu wiederholtem Gegeneinanderschlagen der zur Drehmomentübertragung ansonsten fest aneinander anliegenden Oberflächen bzw. Flanken der Zähne der Verzahnungen. Dieses Gegeneinanderschlagen wird in einem Fahrzeug als Klappergeräusch hörbar und beeinträchtigt auch die Haltbarkeit der auf diese Art und Weise gekoppelten Bauteile.

Um dem entgegenzutreten, ist es aus dem Stand der Technik bekannt, zwischen die Verzahnung bzw. die gegeneinander anliegenden Oberflächen der Zähne dieser Verzahnungen elastisches Material, also beispielsweise Elastomermaterial, einzufügen. Dieses elastische Material dämpft den Aufschlag der Verzahnungen gegeneinander und mindert somit auch die entstehenden Geräusche. Da dabei jedoch das über eine derartige Verbindungsanordnung zu übertragende Drehmoment auch über das elastische Material übertragen werden muss, unterliegt dieses einer extremen Belastung, die auch unter Berücksichtigung der Tatsache, dass derartige Komponenten oftmals in Bereichen mit relativ hoher Temperatur eingesetzt werden, häufig zu einem frühzeitigen Ermüden des elastischen Materials führt.

Es ist die Aufgabe der vorliegenden Erfindung, eine Verbindungsanordnung zur drehfesten Verbindung zweier Bauteile in einem Antriebsstrang eines Fahrzeugs vorzusehen, mit welcher in einfacher Art und Weise ohne der Gefahr einer frühzeitigen Komponentenermüdung das Aufeinanderschlagen von in Kämmeingriff stehenden Verzahnungen gemindert werden kann.

Gemäß der vorliegenden Erfindung wird diese Aufgabe gelöst durch eine Verbindungsanordnung zur drehfesten Verbindung zweier Bauteile in einem Antriebsstrang eines Fahrzeugs zur gemeinsamen Drehung um eine Drehachse, umfassend an einem ersten der beiden Bauteile eine Innenverzahnung und an einem zweiten der beiden Bauteile eine im Verbindungszustand mit der Innenverzahnung in mit Umfangsbewegungsspiel behaftetem Kämmeingriff stehende Außenverzahnung, ferner umfassend eine zwischen dem ersten Bauteil und dem zweiten Bauteil wirkende Bremsanordnung, welche einer Relativdrehung der beiden Bauteile im Bereich des Umfangsbewegungsspiels entgegenwirkt.

Bei der erfindungsgemäßen Verbindungsanordnung ist den beiden in Kämmeingriff stehenden Verzahnungen eine Bremsanordnung zugeordnet, duch welche bei Auftreten einer Relativbewegung, die im Bereich des vorhandenen Umfangsbewegungsspiels grundsätzlich möglich ist, durch Erzeugung einer Bremskraft, also durch Einführen einer Dämpfungsfunktion, das Gegeneinanderschlagen der Verzahnungen abgefangen bzw. abgeschwächt wird. Die vorliegende Erfindung versucht also nicht, durch das Eingliedern zusätzlicher Bauteile das Umfangsbewegungsspiel zu mindern bzw. zu beseitigen, sondern geht den Weg, die aufgrund des nachwievor vorhandenen Umfangsbewegungsspiels in bestimmten Lastzuständen zwangsweise auftretende Relativbewegung zu bremsen, so dass dann, wenn die Verzahnungen beispielsweise bei einem Lastwechsel in gegenseitige Anlage kommen, dies mit gemindertem Impuls erfolgen wird.

Beispielsweise kann vorgesehen sein, dass die Bremsanordnung eine der Relativdrehung entgegenwirkende Reibkraft als Bremskraft erzeugt oder/und eine der Relativdrehung entgegenwirkende Rückstellkraft als Bremskraft erzeugt. Sowohl das Einführen einer Reibkraft als Bremskraft, als auch das Einführen einer Rückstellkraft als Bremskraft bewirkt, dass die sich gegeneinander bewegenden Bauteile diese Bewegung nur unter Überwindung dieser verschiedenen Bremskräfte durchführen können. Dies hat den vorteilhaften Effekt, dass nicht nur das Gegeneinanderschlagen der Verzahnungen gedämpft bzw. verhindert wird, sondern dass vor allem bei häufig auftretenden Lastwechseln bereits in dieser Verbindungsanordnung selbst eine schwingungsdämpfende Funktion erzeugt werden kann.

Die Bremsanordnung kann beispielsweise wenigstens ein bezüglich einem Bauteil vom ersten Bauteil und zweitem Bauteil festgelegtes und am anderen Bauteil von erstem Bauteil und zweitem Bauteil zur Erzeugung einer Bremskraft angreifendes Bremsorgan umfassen. Weiter kann aufgrund des häufig sehr begrenzten axialen Bauraums vorgesehen sein, dass das wenigstens eine Bremsorgan wenigstens ein das andere Bauteil im Wesentlichen radial belastendes Bremselement umfasst. Wenn dabei weiterhin vorgesehen ist, dass das Bremselement das andere Bauteil im Wesentlichen nach radial außen belastet, kann eine im Drehbetrieb zwangsweise auftretende und auf das Bremselement einwirkende Fliehkraft unterstützend genutzt werden, um das Bremselement stärker gegen das andere Bauteil zu pressen.

Beispielsweise kann vorgesehen sein, dass das wenigstens eine Bremselement zwischen zwei Zähne der Verzahnung des einen Bauteils eingreift und das andere Bauteil an einer Radialstirnfläche eines Zahns seiner Verzahnung belastet. Bei einer alternativen oder ggf. zusätzlich vorzusehenden Variante wird vorgeschlagen, dass das wenigstens eine Bremselement zwischen zwei Zähne der Verzahnung des anderen Bauteils eingreift und wenigstens einen dieser Zähne an einer Umfangsflanke belastet.

Um die beim Aufbau einer erfindungsgemäßen Verbindungsanordnung einzusetzenden Teile hinsichtlich der Teileanzahl möglichst gering zu halten und den Aufbau auch sehr einfach gestalten zu können, wird vorgeschlagen, dass das Bremsorgan einen bezüglich des einen Bauteils festgelegten Ringkörper umfasst, von welchem mehrere mit Umfangsabstand zueinander angeordnete Bremslaschen als Bremselemente ausgehen. Dabei ist es dann vorteilhaft, wenn der Ringkörper wenigstens in denjenigen Bereichen bezüglich des einen Bauteils festgelegt ist, in welchen die Bremslaschen von dem Ringkörper ausgehen. Auf diese Art und Weise wird erreicht, dass dort, wo das Bremsorgan durch Belastung des anderen Bauteils eine Reaktionskraft aufnehmen wird, diese Reaktionskraft auch in diesem Bereich auf das eine Bauteil übertragen werden kann bzw. an diesem einen Bauteil abgestützt werden kann. Die Gefahr eines Verwindens des Ringkörpers und einer damit einhergehenden Beeinträchtigung der Bremswirkung kann somit vermieden werden.

Beispielsweise kann das ringartig ausgestaltete Bremsorgan durch eine Lagerungsscheibe bereitgestellt werden, durch welche zwei möglicherweise gegeneinander verdrehbare Komponenten oder Systembereiche des Antriebsstrangs aneinander gelagert bzw. abgestützt sind. Weiterhin ist es möglich, dass das Bremsorgan durch ein Vorspannfederelement bereitgestellt ist, beispielsweise eine Tellerfeder oder dergleichen.

Insbesondere in Systemen, in welchen aufgrund des vorhandenen Bauraums das Eingliedern eines ringartigen Bremsorgans nicht möglich ist, kann vorgesehen sein, dass eine Mehrzahl von in Umfangsrichtung in Abstand zueinander angeordneten Bremsorganen bezüglich des einen Bauteils festgelegt ist.

Wenigstens eines dieser Bremsorgane kann in einem Umfangsmittenbereich bezüglich des einen Bauteils festgelegt sein und in wenigstens einem Umfangsendbereich das andere Bauteil belasten. Alternativ ist es möglich, dass wenigstens ein Bremsorgan in seinen Umfangsendbereichen bezüglich des einen Bauteils festgelegt ist und in einem Umfangsmittenbereich das andere Bauteil belastet.

Um den Aufbau so einfach als möglich gestalten zu können, wird vorgeschlagen, dass wenigstens ein Bremsorgan an dem einen Bauteil durch Federklemmwirkung festgelegt ist und das andere Bauteil reibend belastet. Selbstverständlich ist es auch möglich, dass wenigstens ein Bremsorgan durch vorzugsweise mit dem einen Bauteil integral ausgebildete Befestigungselemente an diesem festgelegt ist.

Die vorliegende Erfindung betrifft ferner einen Torsionsschwingungsdämpfer für einen Antriebsstrang eines Fahrzeugs, umfassend eine Primärseite und eine Sekundärseite, wobei eine Seite von Primärseite und Sekundärseite eine mit der anderen Seite über Dämpferelemente gekoppelte Zentralscheibe umfasst, die durch eine erfindungsgemäße Verbindungsanordnung mit einem Drehmomentübertragungselement verbunden ist, wobei die Zentralscheibe oder ein damit fest verbundenes Element das erste Bauteil und das Drehmomentübertragungselement das zweite Bauteil bildet.

Die vorliegende Erfindung wird nachfolgend mit Bezug auf die beiliegenden Zeichnungen detailliert beschrieben. Es zeigt:
- Fig. 1: eine Teil-Axialansicht einer Verbindungsanordnung;
- Fig. 2: eine Schnittansicht der in Fig. 1 dargestellten Verbindungsanordnung mit weiteren Komponenten eines Antriebsstrangs, geschnitten längs einer Linie II-II in Fig. 1;
- Fig. 3: ein in Fig. 1 erkennbares ringartiges Bremsorgan;
- Fig. 4: vergrößert das Detail im Kreis IV in Fig. 1;
- Fig. 5: eine der Fig. 1 entsprechende Darstellung einer alternativen Ausgestaltungsart einer Verbindungsanordnung;
- Fig. 6: das in Fig. 5 eingesetzte ringartige Bremsorgan;
- Fig. 7: eine Schnittansicht der Verbindungsanordnung der Fig. 5, geschnitten längs einer Linie VII-VII in Fig. 5;
- Fig. 8: eine weitere der Fig. 1 entsprechende Ansicht einer alternativen Ausgestaltungsart einer Verbindungsanordnung;
- Fig. 9: das bei der Verbindungsanordnung der Fig. 8 eingesetzte ringartige Bremsorgan;
- Fig. 10: eine Schnittdarstellung der Verbindungsanordnung der Fig. 8, geschnitten längs einer Linie X-X in Fig. 8;
- Fig. 11: eine weitere der Fig. 1 entsprechende Darstellung einer alternativen Ausgestaltungsart einer Verbindungsanordnung;
- Fig. 12: eine vergrößerte Schnittdarstellung der Verbindungsanordnung der Fig. 11, geschnitten längs einer Linie XII-XII in Fig. 11;
- Fig. 13: ein bei der Verbindungsanordnung der Fig. 11 eingesetztes ringartiges Bremsorgan;
- Fig. 14: vergrößert das Detail XIV in Fig. 11;
- Fig. 15: eine weitere Teil-Axialansicht einer erfindungsgemäßen Verbindungsanordnung mit einem klammerartig ausgestalteten Bremsorgan;
- Fig. 16: in perspektivischer Darstellung das Bremsorgan der Fig. 15;
- Fig. 17: eine Schnittdarstellung der in Fig. 15 gezeigten Verbindungsanordnung, geschnitten längs einer Linie XVII-XVII in Fig. 15;
- Fig. 18: eine weitere Teil-Axialansicht einer Verbindungsanordnung;
- Fig. 19: eine Schnittdarstellung der Verbindungsanordnung der Fig. 18, geschnitten längs einer Linie XIX-XIX in Fig. 18;
- Fig. 20: eine Schnittdarstellung der Verbindungsanordnung der Fig. 18, geschnitten längs einer Linie XX-XX in Fig. 18;
- Fig. 21: eine der Fig. 18 entsprechende Darstellung einer weiteren alternativen Ausgestaltungsform einer Verbindungsanordnung;
- Fig. 22: eine Schnittdarstellung der Verbindungsanordnung der Fig. 21, geschnitten längs einer Linie XXII-XXII in Fig. 21;
- Fig. 23: vergrößert das Detail im Kreis XXIII in Fig. 21;
- Fig. 24: eine Schnittdarstellung der Verbindungsanordnung der Fig. 21, geschnitten längs einer Linie XXIV-XXIV in Fig. 21;
- Fig. 25: eine weitere Teil-Axialansicht einer Verbindungsanordnung;
- Fig. 26: ein bei der Verbindungsanordnung der Fig. 25 eingesetztes Bremsorgan;
- Fig. 27: eine Schnittdarstellung der in Fig. 25 gezeigten Verbindungsanordnung, geschnitten längs einer Linie XXVII in Fig. 25;
- Fig. 28: vergrößert das Detail XXVIII in Fig. 25;
- Fig. 29: eine Ansicht der Verbindungsanordnung in Fig. 25 betrachtet von radial außen;
- Fig. 30: eine weitere Detailansicht der Verbindungsanordnung der Fig. 25;
- Fig. 31: eine Teil-Axialansicht einer weiteren alternativen Ausgestaltungsart einer Verbindungsanordnung;
- Fig. 32: eine Schnittdarstellung der Verbindungsanordnung der Fig. 31, geschnitten längs einer Linie XXXII-XXXII in Fig. 31;
- Fig. 33: ein bei der Verbindungsanordnung der Fig. 31 eingesetztes Verbindungsorgan;
- Fig. 34: eine Schnittdarstellung der Verbindungsanordnung der Fig. 31, geschnitten längs einer Linie XXXIV-XXXIV in Fig. 31;
- Fig. 35: eine Prinzip-Axialdarstellung der in Fig. 31 gezeigten Verbindungsanordnung;
- Fig. 36: in prinzipartiger Darstellung einen Torsionsschwingungsdämpfer für einen Antriebsstrang eines Kraftfahrzeugs, bei welchem eine erfindungsgemäße Verbindungsanordnung implementiert sein kann;
- Fig. 37: zwei Bauteile des Torsionsschwingungsdämpfers der Fig. 36, welche vermittels der erfindungsgemäßen Verbindungsanordnung miteinander verbunden werden können.

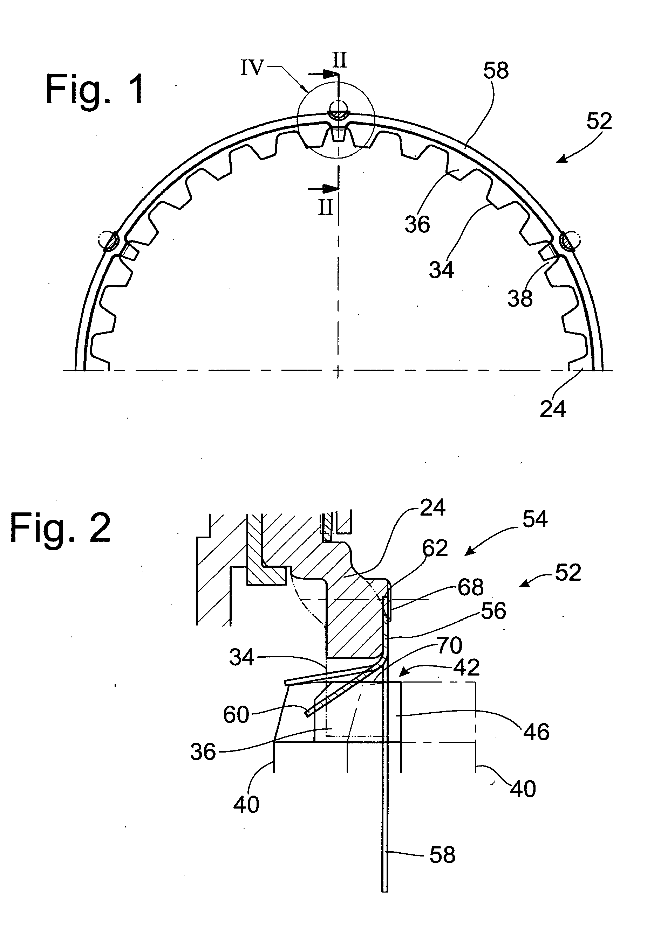

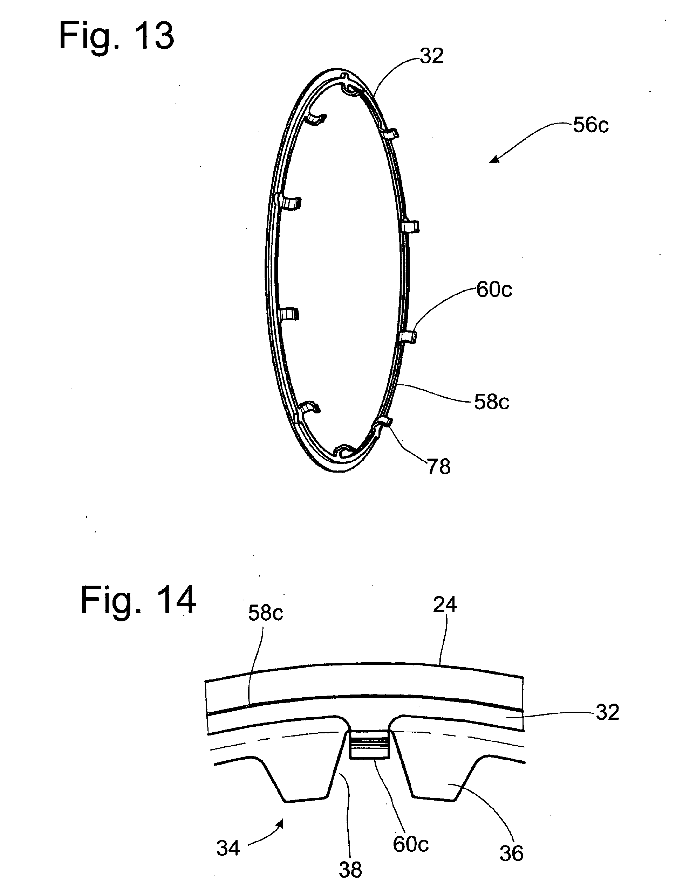

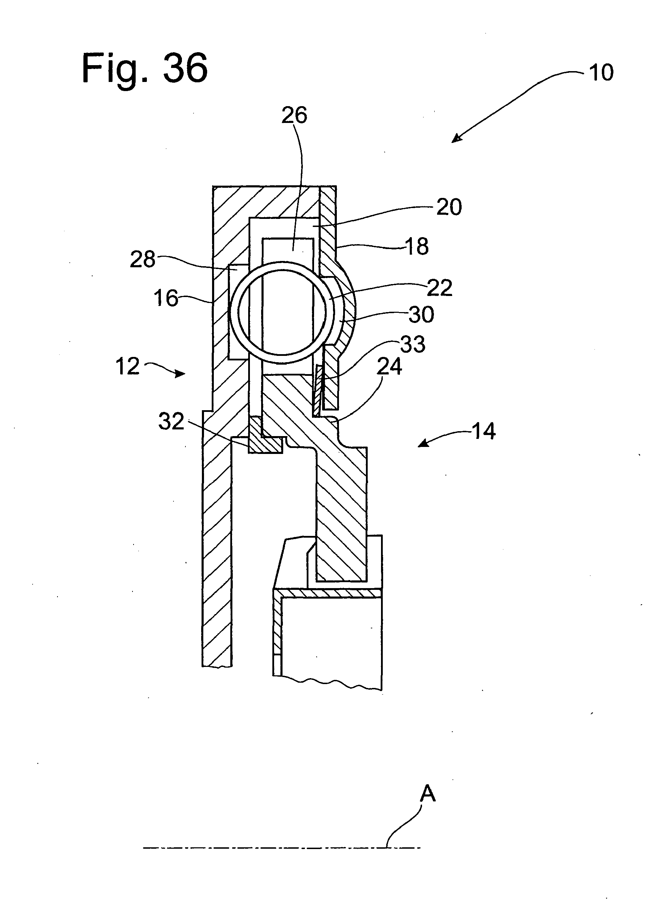

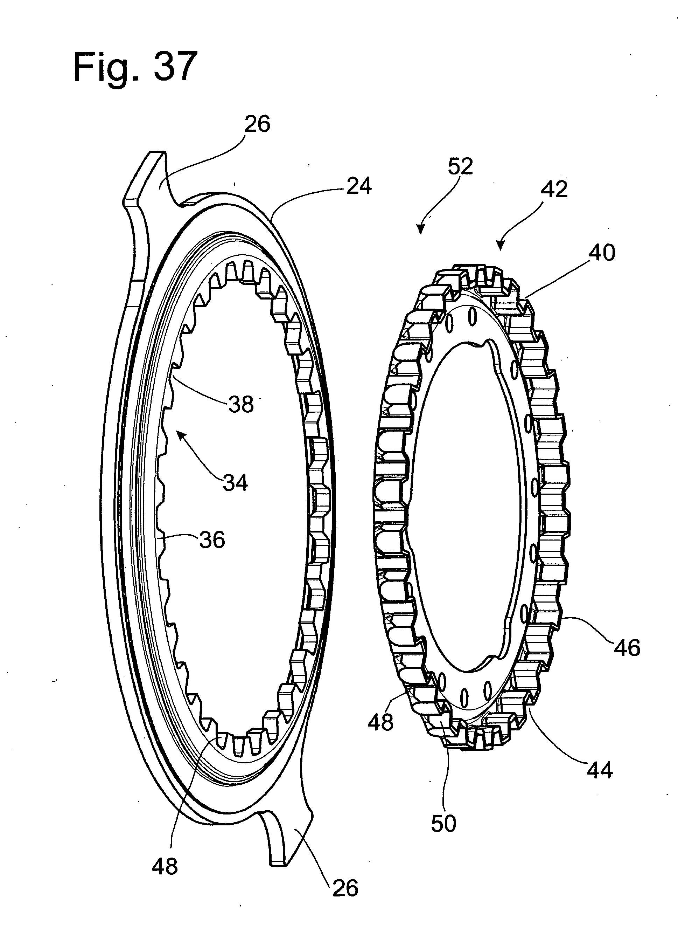

Bevor mit Bezug auf die Fig. 1 bis 35 verschiedene Ausgestaltungsformen einer Verbindungsanordnung beschrieben werden, wird zunächst mit Bezug auf die Fig. 36 und 37 der grundsätzliche Aufbau eines Systembereichs eines Antriebsstrangs eines Kraftfahrzeugs beschrieben, in welchem eine erfindungsgemäße Verbindungsanordnung zum Einsatz gebracht werden kann.

Dieser Systembereich ist hier beispielhaft als Torsionsschwingungsdämpfer dargestellt, wie er allgemein auch als Zweimassenschwungrad bekannt ist. Dieser Torsionsschwingungsdämpfer 10 umfasst eine in ihrem bezüglich der Drehachse A radial inneren Bereich beispielsweise mit einer Antriebswelle, wie z. B. Kurbelwelle, einer Brennkraftmaschine drehfest zu koppelnde Primärseite 12 und eine Sekundärseite 14, über welche das Drehmoment an folgende Komponenten eines Antriebsstrangs, beispielsweise eine Kupplung, Doppelkupplung, Zweischeibenkupplung oder dergleichen, weitergeleitet werden kann. Die Primärseite 12 umfasst ein erstes scheibenartiges Deckelement 16 und ein radial außen damit verbundenes zweites scheibenartiges Deckelement 18, welche allgemein auch als Deckbleche bezeichnet werden. Diese beiden Deckelemente 16, 18 umschließen radial außen einen Raum 20, in welchem die Dämpferfedern 22 des Torsionsschwingungsdämpfers 10 näherungsweise in Umfangsrichtung sich erstreckend angeordnet sind. In diesen Raum 20 greift ein Zentralscheibenelement 24 mit seinen Abstützarmen 26 ein. An diesen Abstützarmen 26 sind in Umfangsrichtung die Dämpferfedern 22 abgestützt. Entsprechend den Abstützarmen 26 weisen die Deckscheibenelemente 16, 18 Abstützbereiche 28, 30 auf, an welchen die Dämpferfedern 22 ebenfalls in Umfangsrichtung abgestützt sind.

Um die Primärseite 12 und die Sekundärseite 14 in definierter Positionierung bezüglich einander zu halten, ist ein ringartiges Lagerungselement 32 vorgesehen, welches im dargestellten Beispiel am Zentralscheibenelement 24 radial positioniert gehalten ist über welches das Zentralscheibenelement 24 sich axial am ersten Deckscheibenelement 16 abstützt. Das ringartige Abstützelement 32 ist aus einem Material aufgebaut, das die gewünschte Abstützfunktion bzw. Lagerungsfunktion erfüllen kann, wobei hier gleichzeitig auch durch Einfügen einer definierten Reibkraft ein zusätzlicher Schwingungsdämpfungsaspekt bereitgestellt werden kann. Um die Anlage des Abstützelements 32 am ersten Deckscheibenelement 16 einerseits und am Zentralscheibenelement 24 andererseits zu gewährleisten, ist ein ebenfalls ringartig ausgestaltetes Federelement 33 vorgesehen. Dieses stützt sich am zweiten Deckscheibenelement 18 und am Zentralscheibenelement 24 axial ab und presst somit das Zentralscheibenelement 24 gegen das Abstützelement 32 und dieses gegen das erste Deckscheibenelement 16. Durch die beiden ringartigen Elemente 32 und 33 ist weiterhin der Raum 20 auch nach radial innen im Wesentlichen dicht abgeschlossen, so dass darin enthaltenes viskoses Medium, welches einen weiteren Beitrag zur Schwingungsdämpfung liefern kann, nicht nach radial innen entweichen kann.

Es sei darauf hingewiesen, dass der vorangehend beschriebene Torsionsschwingungsdämpfer 10 ein Beispiel einer Vielzahl möglicher Ausgestaltungsvarianten repräsentiert, um den grundsätzlichen Aufbau darzulegen.

Das Zentralscheibenelement 24, welches im Sinne der vorliegenden Erfindung als erstes Bauteil interpretiert werden kann, ist mit einer Innen-Stirnverzahnung 34 mit im Wesentlichen nach radial innen sich erstreckenden und in Umfangsrichtung jeweilige Zahnzwischenräume 38 bildenden Zähnen 36 ausgebildet. Ein im Sinne der vorliegenden Erfindung als zweites Bauteil zu interpretierendes und beispielsweise aus Blechmaterial geformtes Drehmomentübertragungselement 40 weist eine Außen-Stirnverzahnung 42 mit in Umfangsrichtung zwischen sich jeweils Zahnzwischenräume 44 bildenden und im Wesentlichen nach radial außen sich erstreckenden Zähnen 46 auf. Die beiden Verzahnungen 34, 42 sind im zusammengefügten Zustand, der in Fig. 36 erkennbar ist, in Kämmeingriff, so dass ein beispielsweise von einem Antriebsaggregat in die Primärseite 12 des Torsionsschwingungsdämpfers 10 eingeleitetes Drehmoment über das Zentralscheibenelement 24 und das Drehmomentübertragungselement 40 dann beispielsweise in den Eingangsbereich einer Kupplung geleitet werden kann.

Um den Kämmeingriff herstellen zu können, können beispielsweise die Zähne 46 der Außenverzahnung 42 an einem axialen Endbereich, wie dies in Fig. 36 und Fig. 37 erkennbar ist, mit einer Anschrägung 48 ausgebildet sein, so dass beim axialen Aufeinanderzubewegen der beiden Bauteile 24, 40 geringe Fehlpositionierungen in Umfangsrichtung ausgeglichen werden können. Ferner sind die beiden Verzahnungen 34, 42 so aufeinander abgestimmt, dass ein geringfügiges Bewegungsspiel, insbesondere Umfangsbewegungsspiel, vorhanden ist. Nur durch Bereitstellen eines derartigen Bewegungsspiels wird es möglich, die beiden Bauteile 24, 40 mit ihren Verzahnungen 34, 42 axial ineinander einzuschieben. Weiterhin wird durch Bereitstellen eines derartigen Umfangsbewegungsspiels gewährleistet, dass auch bei den vorhandenen Fertigungstoleranzen dieses Ineinandereinschieben der beiden Verzahnungen 34, 42 möglich ist.

Das Vorhandensein eines derartigen Umfangsbewegungsspiels bei hergestelltem Kämmeingriff führt vor allem in Lastwechselzuständen, die insbesondere im Leerlauf bzw. bei geringer Last (Creeping) auftreten können, zu einem wiederholten Anschlagen der Zähne 46 und 36 mit ihren Flanken 48, 50 gegeneinander. Um einer dabei auftretenden übermäßigen Verschleißbelastung entgegenzuwirken und auch die bei diesem gegenseitigen Anschlagen entstehenden Klappergeräusche so weit als möglich eliminieren zu können, wird bei einer erfindungsgemäß ausgestalteten und insbesondere die beiden Verzahnungen 34, 42 umfassenden Verbindungsanordnung 52 in nachfolgend beschriebener Art und Weise eine Bremskraft erzeugt, welche die Relativdrehbewegung der beiden Bauteile 24, 40 bezüglich einander abbremst bzw. dämpft, um somit den zwangsweise auftretenden Kontakt zwischen den Zahnflanken 48, 50 so sanft als möglich zu gestalten.

Bevor im Folgenden die verschiedenen erfindungsgemäßen Maßnahmen beschrieben werden, mit welchen eine derartige der Relativdrehbewegung der Bauteile 24, 40 bezüglich einander entgegenwirkende Bremskraft erzeugt werden kann, sei darauf hingewiesen, dass auch die in Fig. 37 gezeigten Bauteile 24, 40 lediglich als Beispiele für eine Vielzahl verschiedener miteinander durch derartige Verzahnungen zu koppelnder Bauteile in einem Antriebsstrang stehen. Beispielsweise könnten auch ein Belagträger und eine Nabe einer Kupplungsscheibe oder ein Torsionsschwingungsdämpfer in einem hydrodynamischen Drehmomentwandler oder ein Turbinenrad in einem hydrodynamischen Drehmomentwandler vermittels einer derartigen Verbindungsanordnung 52 mit einem ein Drehmoment weiterleitenden Bauteil, also beispielsweise einer Nabe, gekoppelt werden.

Eine erste Ausgestaltungsart einer derartigen Verbindungsanordnung 52 wird nachfolgend mit Bezug auf die Fig. 1 bis 4 beschrieben.

Dabei wird im Folgenden lediglich auf diejenigen Komponenten bzw. Systembereiche eingegangen, die hinsichtlich Aufbau und Funktion für die Ausgestaltung dieser Verbindungsanordnung relevant sind. Der nicht weiter dargestellte Aufbau des Torsionsschwingungsdämpfers bzw. der beiden miteinander verkoppeln den Bauteile kann so sein, wie vorangehend mit Bezug auf die Fig. 36 und 37 beschrieben.

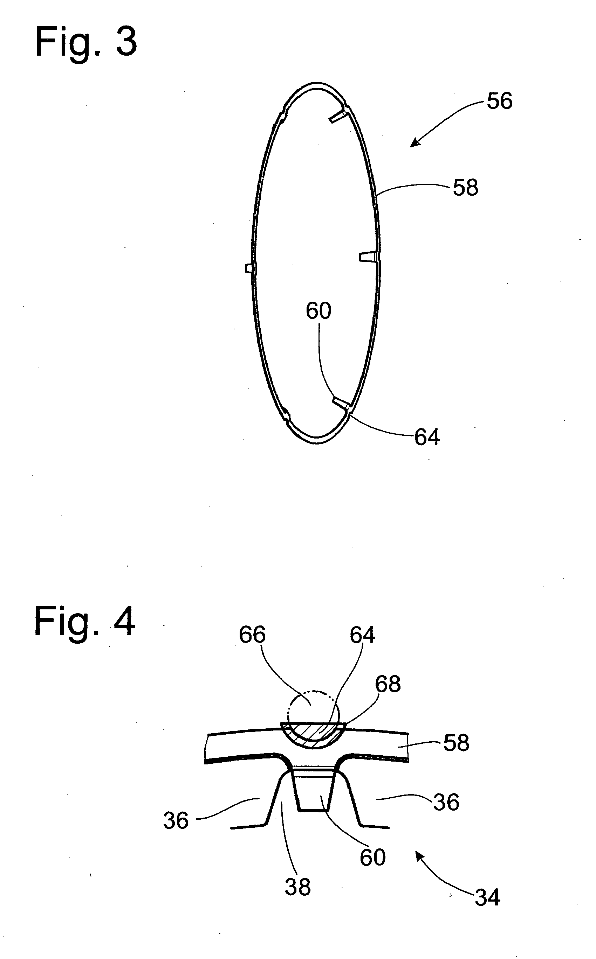

Die in den Fig. 1 bis 4 dargestellte Verbindungsanordnung 52 umfasst eine Bremsanordnung 54, welche die vorangehend beschriebene Bremskraftwirkung zwischen den beiden zu verbindenden Bauteilen 24, 40 erzeugt. Die Bremsanordnung 54 wiederum umfasst ein Bremsorgan 56 mit einem Ringkörper 58. Von diesem Ringkörper 58 gehen, wie in Fig. 3 erkennbar, an mehreren Umfangsbereichen als Bremslaschen ausgebildete Bremselemente 60 nach radial innen aus. Diese Bremselemente bzw. Bremslaschen 60 sind weiterhin in axialer Richtung abgekrümmt, so dass sie sich ausgehend von dem Ringkörper 58 nach radial einwärts und abgeschrägt in Achsrichtung erstrecken.

Der Ringkörper 58 ist am Zentralscheibenelement bzw. Bauteil 24 festgelegt. Dazu weist dieses Bauteil 24 eine in Fig. 2 erkennbare Zentriereinsenkung 62 auf, in welche das Bremsorgan 56 mit seinem Ringkörper 58 eingelegt und auf diese Art und Weise beispielsweise radial zentriert ist. An mehreren Umfangspositionen, vorzugsweise dort, wo nach radial innen die Bremselemente 60 vom Ringkörper 58 abstehen, weist der Ringkörper 58 an seiner radialen Außenseite Einsenkungen 64 auf. Diesen Einsenkungen 64 entsprechend sind am Bauteil 24 zapfenartige Vorsprünge 66 vorgesehen, die bei Positionierung des Ringkörpers 58 in der Einsenkung 62 in die Einsenkungen 64 eingreifen. Auf diese Art und Weise wird nicht nur die radiale Zentrierung unterstützt, sondern auch das Bremsorgan 56 mit seinem Ringkörper 58 bezüglich des Bauteils 24 drehfest gehalten. Weiterhin erkennt man in den Fig. 2 und 4, dass vorzugsweise in denjenigen Bereichen, in welchen die Bremselemente 60 vom Ringkörper 58 nach radial innen abstehen und auch die Umfangshalterung des Ringkörpers 58 vorgesehen ist, beispielsweise durch Umformung des Bauteils 24 Fixierabschnitte 68 gebildet sind, welche sich über den Ringkörper nach radial innen erstrecken. Diese Fixierabschnitte 68 überlappen den Ringkörper 58 und sorgen somit dafür, dass dieser auch in Richtung vom Bauteil 24 weg axial gehalten ist. Da diese axiale Halterung exakt dort erfolgt, wo auch die Bremselemente bzw. Bremslaschen 60 vom Ringkörper 58 abstehen und somit, wie im Folgenden noch dargelegt, eine Reaktionskraft in den Ringkörper 58 eingeleitet wird, besteht eine stabile und gegen Verwinden des Ringkörpers 58 gesicherte Befestigung des Bremsorgans 56 am Bauteil 24.

Die am Ringkörper 58 vorgesehenen Bremselemente 60 erstrecken sich weiterhin dort nach radial innen, wo die Verzahnung 34 am Bauteil 24 eine Zahnlücke 38 aufweist. Durch die axiale Abbiegung der Bremselemente 60 greifen diese in diese Zahnlücke 38, also zwischen zwei Zähne 36 der Verzahnung 34 ein. In einem vor Herstellen des Kämmeingriffs mit dem Bauteil 40 vorhandenen nichtbelasteten Zustand der Bremselemente 60 erstrecken sich diese vergleichsweise stark nach radial innen, was in Fig. 2 durch die mit Schraffur gezeichnete Darstellung des Bremselements 60 und die mit unterbrochener Linie dargestellte Positionierung des Bauteils 40 erkennbar wird. Wird nun dieses Bauteil 40 in seine endgültige Lage bezüglich des Bauteils 24 geschoben, so nimmt es die dann mit durchgezogener Linie dargestellte Positionierung ein. Im Zuge dieses Übergangs gelangt das Bauteil 40 mit einem in eine Zahnlücke 38, in welcher auch ein Bremselement 60 sich erstreckt, eingreifend zu positionierenden Zahn 46 in Kontakt mit diesem Bremselement 60. Beim weiteren axialen Einschieben des Bauteils 40 verspannt dieser Zahn 46 das Bremselement 60, so dass es in die in Fig. 2 mit nicht schraffierter Darstellung gezeigte Positionierung gelangt, in welcher es eine Außenstirnfläche 70 dieses Zahns 46 belastet. Die dabei auftretende Reaktionskraft wird, wie vorangehend bereits dargelegt, über den Ringkörper 58 und die Fixierabschnitte 68 in das Bauteil 24 eingeleitet.

In dem in Fig. 2 erkennbaren Zustand, in welchem also die beiden Verzahnungen 34, 42 in Kämmeingriff miteinander stehen, wird bei Auftreten einer Relativumfangsbewegung zwischen diesen beiden Bauteilen 24 und 40 das Bremsorgan 56 mit seinen Bremselementen 60, also den vom Ringkörper 58 ausgehenden Bremslaschen, an den Außenstirnflächen 70 verschiedener mit einem jeweiligen Bremselement belasteter Zähne 46 reiben, da diese Bremselemente 60 sich zusammen mit dem Bauteil 24 bezüglich des Bauteils 40 in Umfangsrichtung bewegen werden. Die dabei entstehende Reibungskraft dämpft bzw. bremst die Relativdrehbewegung, so dass ein zu starkes Gegeneinanderschlagen der beiden Verzahnungen 34, 42 verhindert wird. Sind beispielsweise ausgehend von einer neutralen Positionierung der beiden Verzahnungen bezüglich einander die auftretenden Drehmomente oder Drehmomentschwankungen nur vergleichsweise gering, so dass die zwischen den Bremselementen 60 und den Außenstirnflächen 70 der Zähne 46 bestehende Haftreibung nicht überwunden werden kann, so kann dies zu einer Verwindung der Bremselemente 60 führen, was aufgrund der Tatsache, dass diese bzw. das gesamte Bremsorgan beispielsweise aus Blechmaterial gefertigt ist, grundsätzlich möglich ist. Diese Verwindung erzeugt eine Rückstellkraft, welche zwischen den beiden Bauteilen 24 und 40 wirkt uns somit ebenfalls einen Beitrag dazu liefert, dass beispielsweise im lastfreien Zustand, in dem in einem im Drehmomentenfluss folgenden Getriebe kein Gang eingelegt ist, die Verzahnungen 36 und 42 überhaupt nicht gegeneinander schlagen oder nur mit deutlich abgeschwächter Wucht gegeneinander schlagen. Sowohl die durch Reibung erzeugte Bremskraft, als auch die durch Rückstellwirkung erzeugte Bremskraft kann durch Auswahl des Materials, der Materialstärke und der Formgebung des Bremsorgans 56 stark beeinflusst werden, so dass hier eine Abstimmung auf die zu erwartenden bzw. abzufangenden Drehmomentschwankungen vorgenommen werden kann.

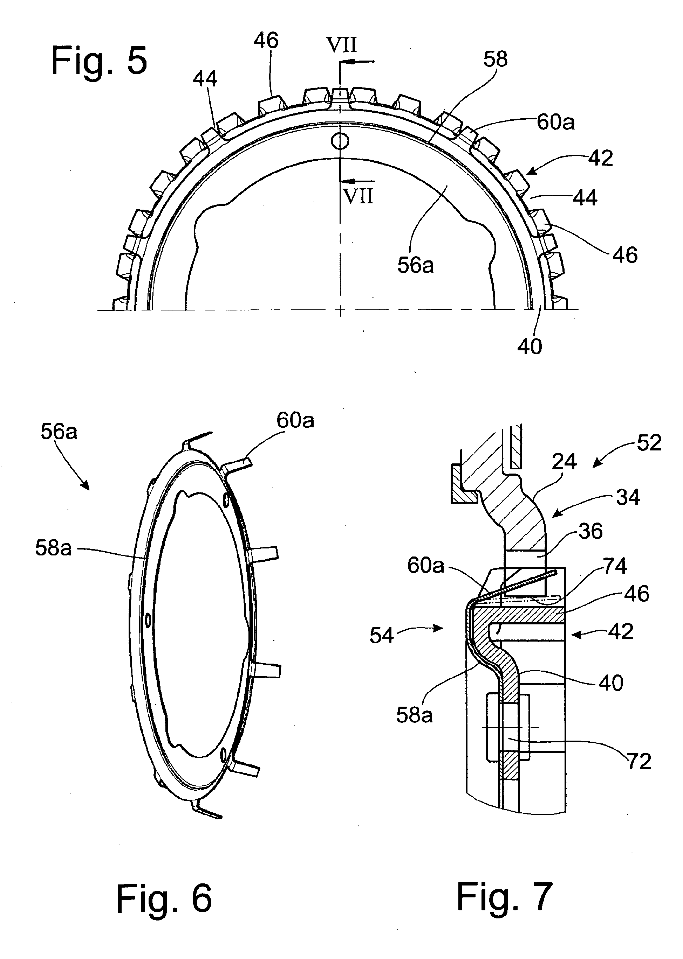

Eine Abwandlung einer derartigen Verbindungsanordnung 52 ist in den Fig. 5 bis 7 dargestellt. Man erkennt, dass hier das ringartig ausgestaltete Bremsorgan 56a nicht am Bauteil 24, sondern am radial inneren Bauteil 40 festgelegt ist. Da in diesem Falle auch das radial innere Bauteil 40 durch Umformen eines Blechrohlings gebildet ist, kann die Verbindung dieses Bauteils 40 mit dem Ringkörper 58a beispielsweise durch Nietbolzen 72 erfolgen. Die Bremselemente bzw. Bremslaschen 60a erstrecken sich nunmehr nach radial außen und durch axiale Abwinkelung in einen jeweiligen Zwischenraum 44 zwischen zwei Zähnen 46 der Verzahnung 42 am Bauteil 40. Ebenso wie bei der vorangehend beschriebenen Ausgestaltungsform haben durch die Wechselwirkung mit den Zähnen der jeweils anderen Verzahnung, hier also der Verzahnung 34 am Bauteil 24, die Bremslemente 60a beim Zusammenfügen eine zusätzliche Radialzentrierfunktion. Bei der in den Fig. 5 bis 7 dargestellten Ausgestaltungsform belasten bei hergestelltem Kämmeingriff dann die verstärkt nach radial innen gepressten Bremselemente 60a eine Innenstirnfläche 74 von Zähnen 36 der Verzahnung 34 mit den gleichen Effekten, wie vorangehend beschrieben. Auch hier wird also eine Bremskraft durch Reibwirkung und ggf. auch durch Rückstellfederwirkung erhalten.

Ein wesentlicher Vorteil der in den Fig. 5 bis 7 dargestellten Ausgestaltungsvariante ist, dass durch die nach radial außen gerichtete Belastungswirkung der Bremsabschnitte 60a im Rotationsbetrieb diese Wirkung durch die dann auftretenden Fliehkräfte unterstützt wird. Das heißt, mit zunehmender Drehzahl nimmt auch die Bremswirkung, insbesondere die durch Reibung erzeugte Bremskraft, zu.

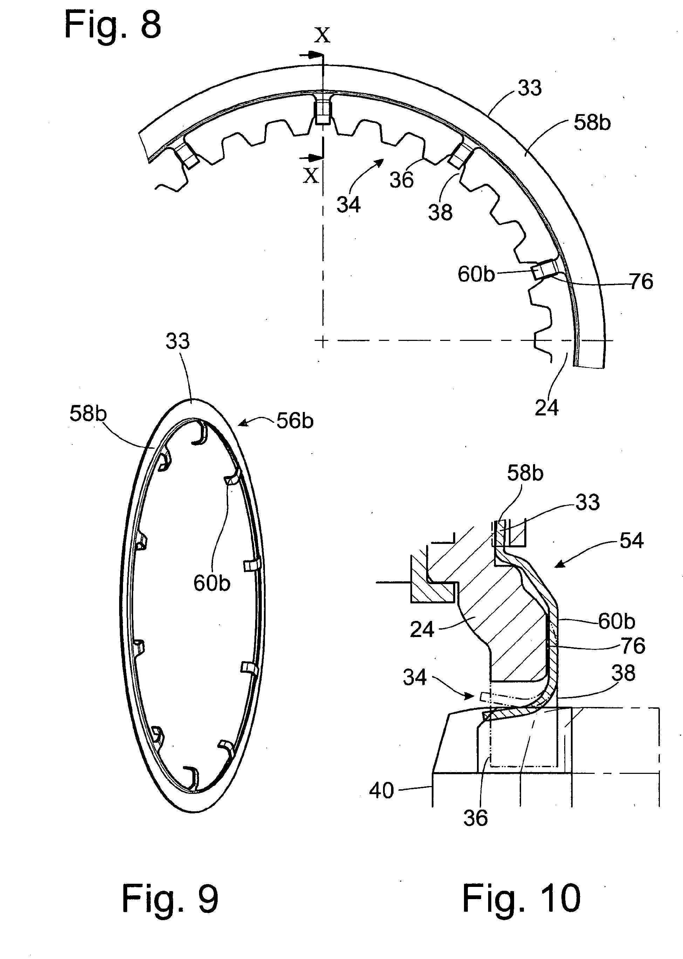

In den Fig. 8 bis 10 ist eine Weiterbildung der vorangehend insbesondere mit Bezug auf die Fig. 1 bis 4 beschriebenen Ausgestaltungsvariante dargestellt. Während hier grundsätzlich das gleiche Aufbauprinzip mit ringartigem Bremsorgan 56b gewählt ist, ist dieses Bremsorgan 56b der Bremsanordnung 54 nunmehr nicht durch ein separates, beispielsweise am Bauteil 24 festzulegendes Element bereitgestellt, sondern ist bauteilemäßig und funktionenmäßig verschmolzen mit dem vorangehend bereits mit Bezug auf die Fig. 36 beschriebenen ringartigen Federelement 33. An diesem beispielsweise aus Federstahl oder dergleichen hergestellten, allgemein als Tellerfeder ausgestalteten Federelement 33, das im Wesentlichen auch den Ringkörper 58b bereitstellt, sind nunmehr nach radial innen greifend die Bremselemente 60b vorgesehen, die sich mit radial inneren und axial abgewinkelten Endabschnitten in Zwischenräume 38 zwischen zwei Zähnen 36 der Verzahnung 34 hineinerstrecken. Auch damit werden die gleichen Effekte erzielt, wie vorangehend bereits beschrieben.

Um bei dieser Ausgestaltungsform sicherzustellen, dass durch die im Drehbetrieb wiederholt auftretenden und an sich abzudämpfenden Relativdrehbewegungen zwischen den beiden Bauteilen 24 und 40 das Federelement 36 nicht in ungewollter Weise verdreht wird, kann dieses mit seinen nach radial innen greifenden Bremselementen 60b in am Zentralscheibenelement bzw. Bauteil 24 vorgesehene Einsenkungen 76 eingreifend positioniert sein.

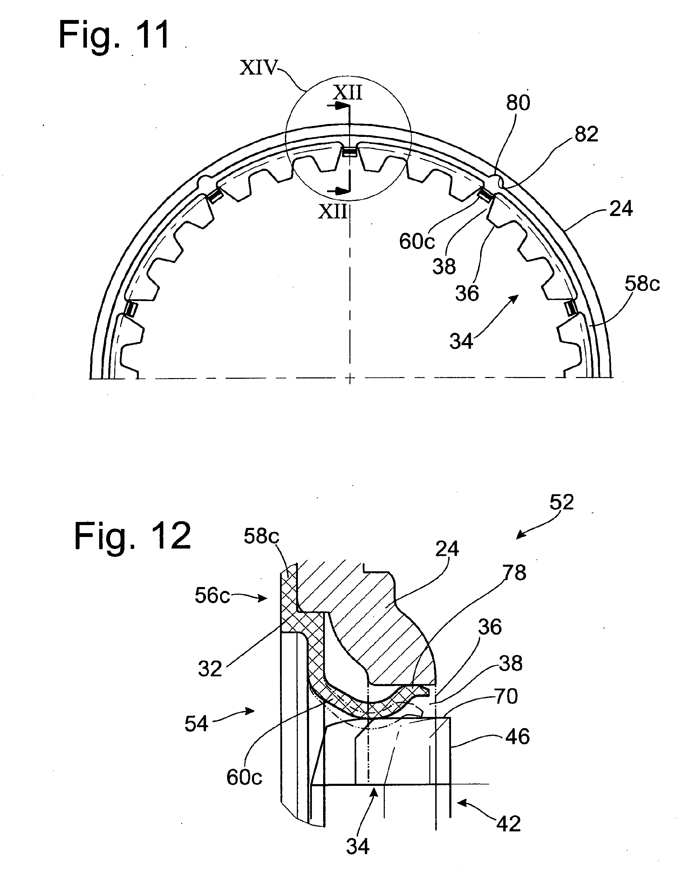

Eine weitere Abwandlung dieses Aufbauprinzips ist in den Fig. 11 bis 14 dargestellt. Man erkennt auch hier, dass die Funktion des Bremsorgans 56c übernommen ist durch ein bereits vorhandenes Bauteil, nämlich das ringartige Abstützelement 32, welches mit Bezug auf die Fig. 36 ebenfalls beschrieben wurde. An diesem beispielsweise aus Kunststoffmaterial aufgebauten ringartigen Abstützelement 32, welches im Wesentlichen auch den Ringkörper 58c des Bremsorgans 56c bereitstellt, sind nach radial innen greifend die Bremselemente 60c vorgesehen, so dass sie sich wieder in den Zwischenraum 38 zwischen zwei Zähnen 36 der Verzahnung 34 hineinerstrecken. Dabei sind die Bremselemente bzw. Bremslaschen 60c so geformt, dass sie bei hergestelltem Kämmeingriff wieder die Außenstirnfläche 70 an jeweiligen Zähnen 46 der Verzahnung 42 belasten, sich gleichzeitig aber auch im Bereich ihrer Enden 78 am Bauteil 24 im Bereich zwischen zwei Zähnen 36 abstützen. Durch diese zusätzliche Abstützung wird die Steifigkeit der so gebildeten und bei Herstellung des Kämmeingriffs zu verformenden Bremsabschnitte 60c deutlich erhöht, mit einem entsprechenden Einfluss auf die durch diese erzeugbare Bremskraft. Dies ist vor allem bei der in Fig. 12 gezeigten Ausgestaltungsvariante, bei welcher diese Bremselemente 60c aus Kunststoffmaterial gebildet sind, besonders vorteilhaft, da dieses im Allgemeinen nicht mit entsprechender Vorspannkraft ausgebildet werden können, wie beispielsweise bei Herstellung des Bremsorgans aus Blech bzw.
Federstahlmaterial.

Um bei dieser Ausgestaltungsvariante eine definierte Umfangspositionierung des ringartigen Abstützelements 32 insbesondere bezüglich des Bauteils bzw. Zentralscheibenelements 24 sicherzustellen, kann dieses mit Arretierelementen 80, beispielsweise Arretiervorsprüngen ausgebildet sein, welche in entsprechende Gegen-Arretierelemente 82, beispielsweise Einsenkungen, am Bauteil 24 eingreifen und somit eine Relativdrehung dieser beiden Elemente bezüglich einander verhindern.

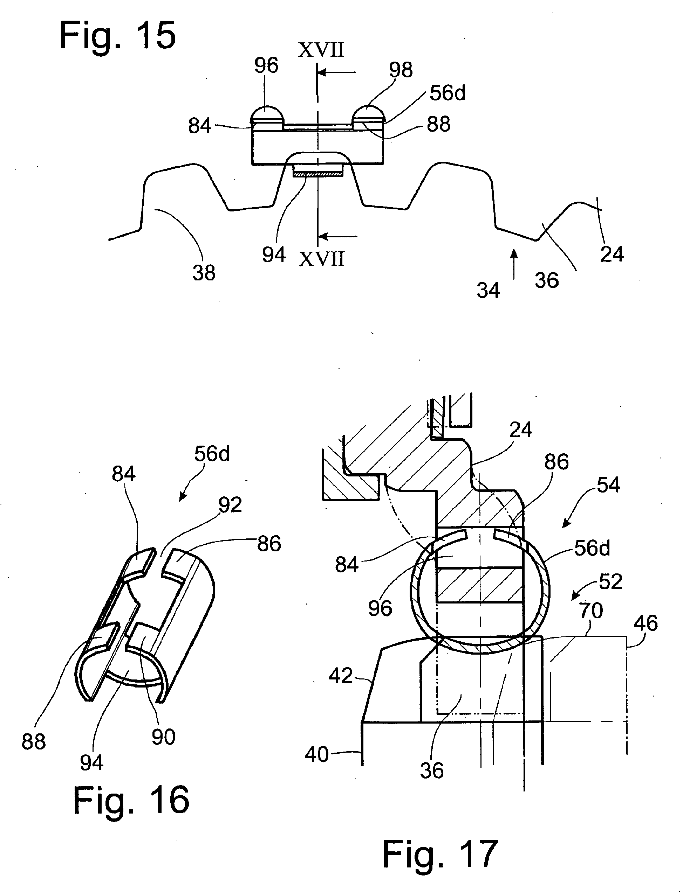

Eine weitere Ausgestaltungsart einer Verbindungsanordnung 52 ist in den Fig. 15 bis 17 dargestellt. Während bei den vorangehend beschriebenen Ausgestaltungsvarianten das jeweils vorhandene Bremsorgan der Bremsanordnung grundsätzlich ringartig ausgestaltet war und somit vorzugsweise um die Drehachse des Systems geschlossen war, ist bei der in den Fig. 15 bis 17 dargestellten Ausgestaltungsform die Bremsanordnung 54 mit einer Mehrzahl von in Umfangsrichtung verteilen, vorzugsweise mit gleichmäßigem Umfangsabstand zueinander angeordneten Bremsorganen 56d ausgebildet, von welchen in den Figuren jeweils eines erkennbar ist.

Dieses Bremsorgan 56d, das beispielsweise aus Federblechmaterial geformt sein kann, weist im Allgemeinen eine näherungsweise zylindrische bzw. hülsenartige Gestalt auf. Das Bremsorgan 56d ist an einem Umfangsbereich durchgehend geschlitzt und bildet dort in jeweiligen Endbereichen jeweils zwei Paare mit einander gegenüberliegenden Fixiervorsprüngen 84, 86 bzw. 88, 90. An der bezogen auf den Umfang eines derartigen Bremsorgans 56 dem Schlitz bzw. Zwischenraum 92 zwischen den Fixiervorsprüngen 84, 86 bzw. 88, 90 gegenüberliegenden Positionierung weist das Bremsorgan 56d näherungsweise in einem Längenmittenbereich einen Beaufschlagungsabschnitt 94 auf, der die Funktion eines Bremselements 60d übernimmt.

In Zuordnung zu den Fixiervorsprüngen 84, 86 einerseits und 88, 90 andererseits sind für jedes Bremsorgan 56d am Zentralscheibenelement bzw. Bauteil 24 Fixierausnehmungen 96, 98 vorhanden. Im dargestellten Beispiel sind diese Fixierausnehmungen 96, 98 als das Bauteil 24 vollständig axial durchsetzende Öffnungen ausgestaltet, könnten selbstverständlich aber auch als sacklochartige Einsenkungen bereitgestellt sein.

Die Bremsorgane 56d werden am Bauteil 24 dadurch festgelegt, dass sie im Bereich ihres Schlitzes oder Zwischenraums 92 aufgespreizt werden und somit von radial innen über das Bauteil 24 geführt werden, bis die Fixiervorsprünge 84, 86, 88, 90 in die zugehörigen Aussparungen 96 bzw. 98 einrasten. Dabei kommt der Beaufschlagungsabschnitt 94 in einem Zwischenraum 98 zwischen zwei Zähnen 96 der Verzahnung 34 zu liegen, also einem Volumenbereich, in welchen auch die jeweiligen Zähne 46 der Verzahnung 42 beim Herstellen des Kämmeingriffs zu bewegen sind. Wie in Fig. 17 erkennbar, kommen im Zuge dieser Herstellung des Kämmeingriffs die Zähne 46 wieder mit ihren Außenstirnflächen 70 in Anlage am Bremsorgan 56d bzw. jedem Bremsorgan 56d, so dass dieses durch die radiale Abstützung der Fixiervorsprünge 84, 86, 88, 90 am Bauteil 24 nach radial außen dann mit seinem Beaufschlagungsabschnitt 94 einen jeweiligen Zahn 46 nach radial innen belastet. Dabei wird der vorangehend beschriebene Bremseffekt durch Erzeugung einer Reibkraft dann, wenn die Bauteile 24 und 40 sich in Umfangsrichtung bezüglich einander bewegen, generiert.

Bei dieser Ausgestaltungsform wird es einerseits durch die Ausgestaltung der einzelnen Bremsorgane 56d selbst und andererseits durch die Auswahl der Anzahl an Bremsorganen 56d möglich, einen starken Einfluss auf die bereitgestellte Bremswirkung der Bremsanordnung 54 zu nehmen.

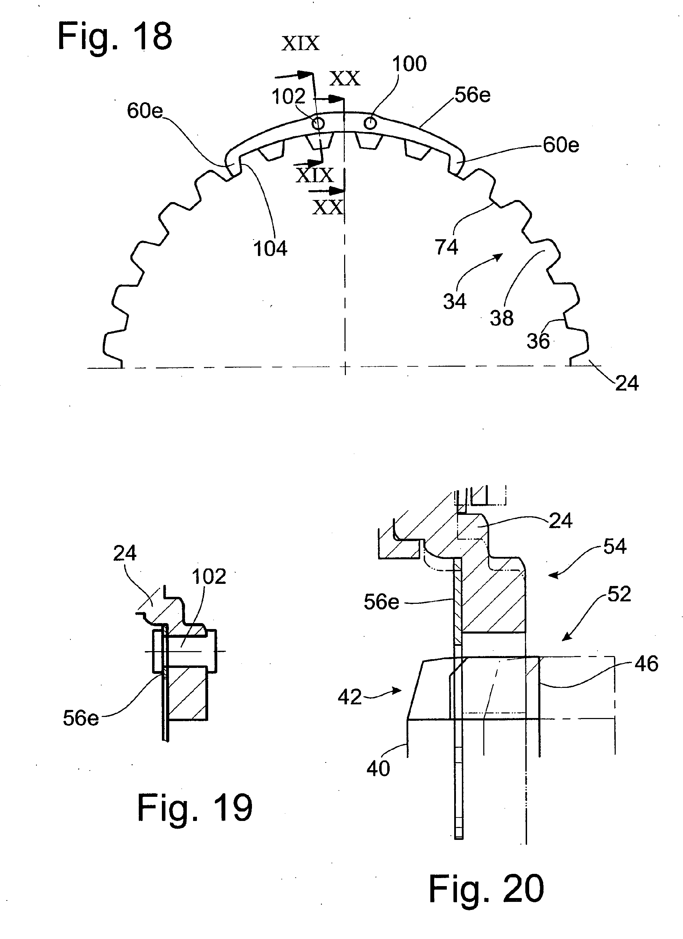

Eine weitere Ausgestaltungsform einer Verbindungsanordnung 52 ist in den Fig. 18 bis 20 dargestellt. Auch diese umfasst mehrere in Umfangsrichtung verteilt angeordnete Bremsorgane 56e. Diese sind, wie vor allem in Fig. 18 erkennbar, in Umfangsrichtung langgestreckt ausgebildet und sind näherungsweise in einem Längenmittenbereich derselben beispielsweise durch zwei Nietbolzen 100, 102 am Bauteil bzw. Zentralscheibenelement 24 festgelegt. Ausgehend von dieser Festlegung am Zentralscheibenelement 24 erstreckt sich das bzw. jedes Bremsorgan 56e in Umfangsrichtung und bildet dort mit einem nach radial innen greifenden zahnänlichen Abschnitt ein jeweiliges Bremselement 60e. Diese Bremselemente 60e sind in Umfangsrichtung so positioniert, dass sie bei hergestelltem Kämmeingriff jeweils in einen Zwischenraum 44 der Verzahnung 42 am Bauteil 40 eingreifen. Die Bremsabschnitte 60e sind dabei bezüglich der Zähne 36 der Verzahnung 34 nach radial innen mit Übermaß ausgebildet, also erstrecken sich weiter nach radial innen, als die Innenstirnflächen 74e der Zähne 36 liegen. Im Kämmzustand pressen somit die Bremsabschnitte 60e mit ihren radial inneren Enden gegen das Bauteil 40 im Bereich zwischen zwei Zähnen 46 und erzeugen somit die einer Relativumfangsbewegung entgegenwirkende Reibungsbremskraft.

Die Bremsorgane 56e der Ausgestaltungsform der Fig. 18 bis 20 könnten grundsätzlich auch so gestaltet sein, dass sie mit jeweiligen Flanken 104 in Anlage an einer gegenüberliegenden Flanke 50 eines Zahns 46 der Verzahnung 42 gelangen können. Da die Flanken 104 und die komplementären Flanken 50 sich nicht exakt radial erstrecken, sondern bezüglich einer Radiallinie geneigt sind, kann dadurch der Effekt erreicht werden, dass bei Relativumfangsbewegung zwischen den beiden Bauteilen 24, 40 beispielsweise zunächst die vorangehend angesprochene Reibkraft erzeugt wird, und dann, wenn nach geringer Verdrehung die Flanke 104 an einer gegenüberliegenden Flanke 50 in Anlage kommt, durch die Schrägstellung dieser Flanke das Bremsorgan 56d in seinem Umfangsendbereich nach radial außen beaufschlagt wird. Aufgrund seiner radial elastischen Ausgestaltung erzeugt es dabei eine Rückstellkraftwirkung, die eine weitere Bewegung des Bauteils 40 bezüglich des Bauteils 24 und somit bezüglich der Bremsorgane 56e weiter abbremst. Hier könnte grundsätzlich die Ausgestaltung auch derart sein, dass die Bremselemente 60e mit ihren nach radial innen gerichtet liegenden Enden nicht in Reibkontakt mit dem Bauteil 40 treten, sondern nur der vorangehend angesprochene Bremseffekt erzeugt wird, wenn aufgrund des gegenseitigen Kontakts der Flanken 104 und 50 die Bremsorgane 56e in ihren Umfangsendbereichen nach radial außen verformt werden und somit eine Rückstellfederwirkung generieren. Da bei der in den Fig. 18 bis 20 dargestellten Ausgestaltungsform die Bremsorgane 56e in Umfangsrichtung betrachtet im Wesentlichen symmetrisch ausgestaltet sind, kann dieser Bremseffekt sowohl in Schubrichtung als auch in Zugrichtung gleichermaßen genutzt werden.

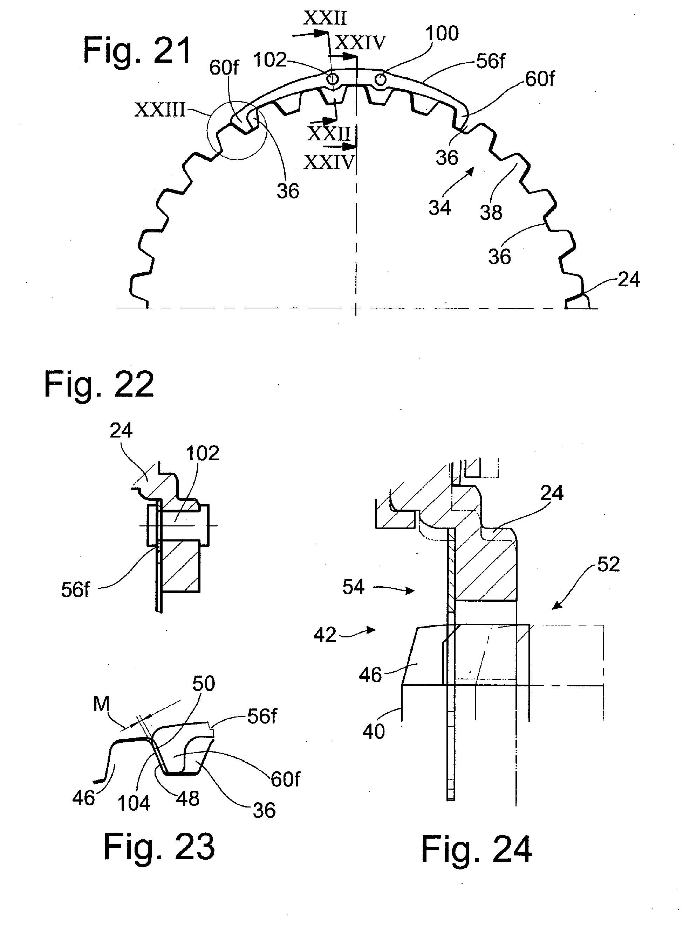

Eine Abwandlung dieses Prinzips ist in den Fig. 21 bis 24 dargestellt. Man erkennt hier, dass das Bremsorgan 56f im Bereich seiner Bremsabschnitte 60f in Umfangsrichtung mit geringem Übermaß M bezüglich jeweils eines Zahns 36 der Verzahnung 34 ausgebildet ist. Das heißt, in Umfangsrichtung steht die Flanke 104 eines Bremselements 60f über die Flanke 48 des zugehörigen Zahns 36 über und kann somit unter Überbrückung des Umfangsbewegungsspiels in Anlage an der Flanke 50 eines Zahns 46 der Verzahnung 42 kommen. Bei Umfangsbelastung, also zu übertragendem Drehmoment, wird durch die Schrägstellung der beiden in Anlage aneinander kommenden Flanken 50, 104 das Bremsorgan 56 in seinem Umfangsendbereich wieder nach radial außen federn und somit die vorangehend beschriebene Rückstellkraftwirkung erzeugen. Selbstverständlich kann auch hier der radial innere Endbereich eines jeweiligen Bremsabschnitts 60f reibend am Bauteil 40 aufliegen.

Man erkennt in Fig. 21, dass das Bremsorgan 56f hier nicht symmetrisch bzw. spiegelsymmetrisch ausgestaltet ist, sondern so gestaltet ist, dass seine beiden in seinen Umfangsenden liegeriden Bremselemente 60f in der gleichen Umfangsrichtung wirksam werden. Dies kann beispielsweise die Zugrichtung sein, so dass hier das dargestellte Bremsorgan 56f primär bzw. nur dann wirksam wird, wenn ein Drehmoment in Zugrichtung zu übertragen ist. Ein im Winkelabstand von 180° liegendes Bremsorgan 56f könnte dann so gestaltet sein, dass es in Schubrichtung wirksam wird oder ggf. auch in der gleichen Richtung wirksam wird, wie das in Fig. 21 dargestellte Bremsorgan 56f.

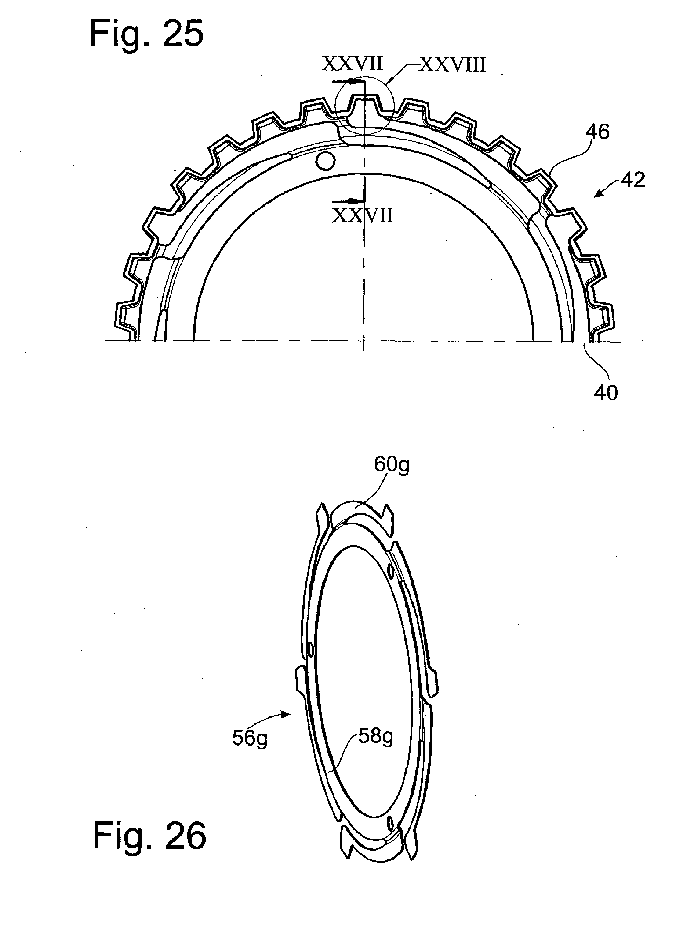

Die Fig. 25 bis 29 zeigen eine weitere Ausgestaltungsform, bei welcher die Bremskraft der Bremsanordnung 54 primär durch eine Rückstellkraft erzeugt wird. Man erkennt hier ein ringartig ausgestaltetes Bremsorgan 56g, das mit seinem Ringkörper 58g nunmehr am Bauteil 40 festgelegt ist, beispielsweise durch den Einsatz von Nietbolzen 72.

Vom Ringkörper 58g in Umfangsrichtung und nach radial außen spiralartig ausgehend sind mehrere Bremselemente 60g vorgesehen. Diese sind in ihren freien Endbereichen jeweils so gestaltet, dass sie eine der Form der Zähne 46 der Verzahnung 42 am Bauteil 40 entsprechende Kontur aufweisen, jedoch; wie dies in Fig. 28 verdeutlicht ist, mit geringem Übermaß M insbesondere in Umfangsrichtung ausgestaltet sind. Das heißt, die Flanken 104 dieser an ihren freien Enden zahnartig geformten Bremselemente 60g stehen über die Flanken 50 der Zähne 56 in Umfangsrichtung über.

Wird ein mit einem derartigen Bremsorgan 56g versehenes Bauteil 40 dann axial in das Bauteil 24 eingeschoben, um den Kämmeingriff der Verzahnungen 34 und 42 herzustellen, so wird, abhängig vom vorhandenen Umfangsbewegungsspiel, das bzw. jedes Bremselement 60g geringfügig nach radial innen beaufschlagt, und zwar durch die Wechselwirkung seiner Flanken 104g mit den Flanken 48 der Zähne 36 der Verzahnung 34. Eine Relativumfangsbewegung zwischen den Bauteilen 40 und 24 kann dann nur unter noch weitergehender Verschiebung der Bremselemente 60g in ihren freien Endbereich nach radial innen erfolgen, wobei aufgrund der Elastizität bzw. der Federwirkung der Bremselemente 60g, d. h. deren Vorspannung nach radial außen, der Relativumfangsbewegung im Bereich des Umfangsbewegungsspiels eine Rückstellkraft, also im Sinne der Erfindung einer Bremskraft, entgegengesetzt wird. Ist das Umfangsbewegungsspiel so groß, dass bei Herstellen des Kämmeingriffs die Flanken 104 nicht in Anlage an den Flanken 68 kommen, so wird dies dann der Fall sein, wenn nach geringfügiger Relativumfangsbewegung ein Teil des Umfangsbewegungsspiels aufgebraucht ist.

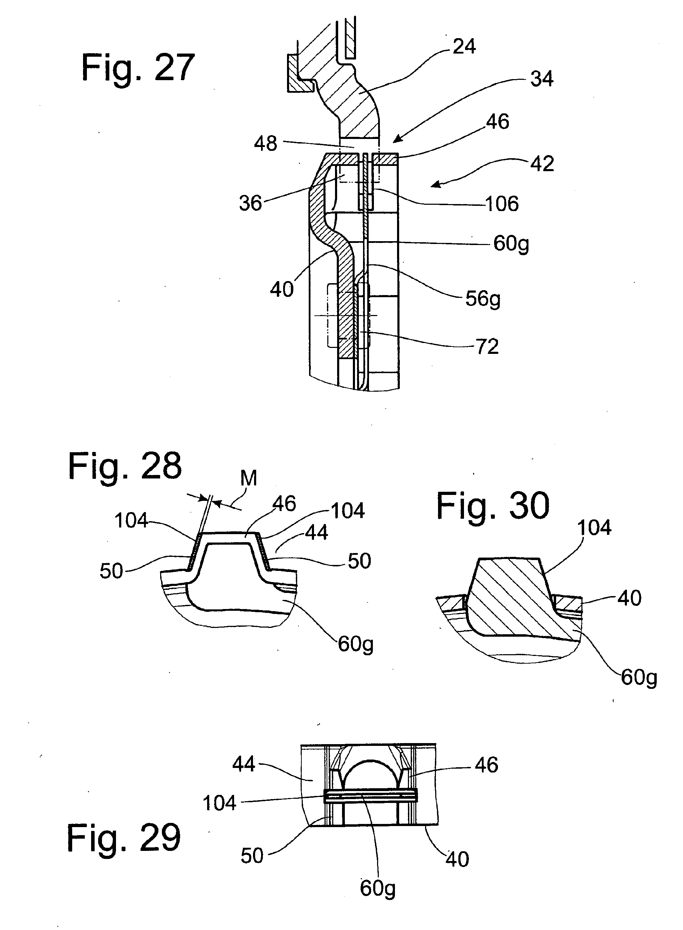

Da, wie man vor allem in Fig. 27 erkennt, das Bremsorgan 56g mit seinen nach radial außen greifenden Bremselementen 60g näherungsweise im Längenmittenbereich der Zähne 46 liegt und in diesen Zähnen dann ein Schlitz 106 ausgebildet ist, durch welchen ein jeweiliges Bremselement 60g nach radial außen greifen kann, ist sichergestellt, dass dieses Bremselement 60g auch in gegenseitigen Kontakt mit den Zähnen 36 der Verzahnung 34 treten kann.

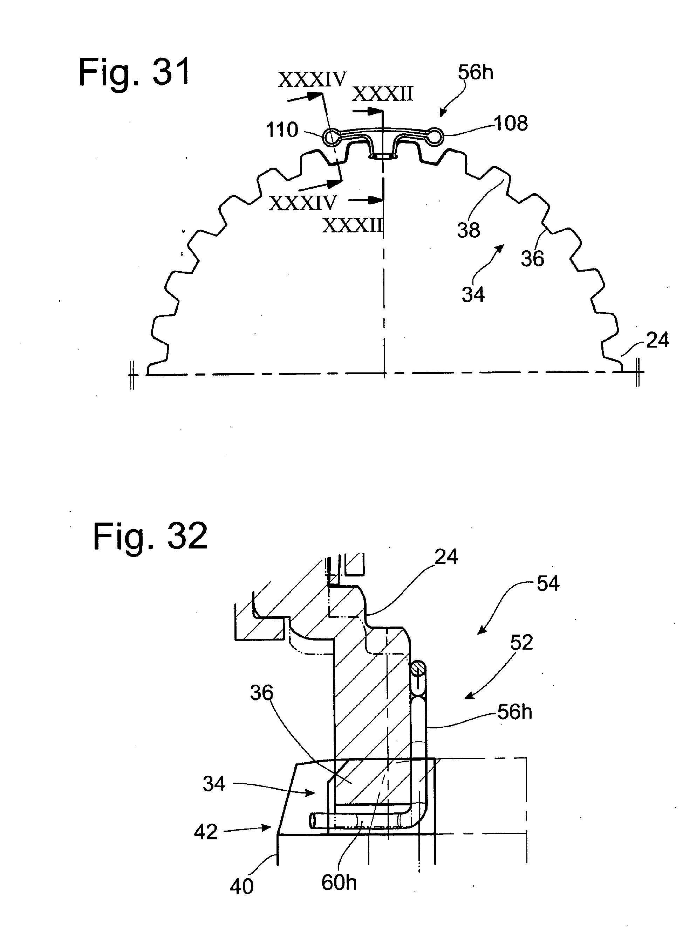

Eine weitere Ausgestaltungsform einer Verbindungsanordnung zwischen zwei Bauteilen 24, 40 eines Antriebsstrangs ist in den Fig. 31 bis 35 gezeigt. Auch hier umfasst die Verbindungsanordnung 52 bzw. die Bremsanordnung 54 derselben eine Mehrzahl von über den Umfang verteilt angeordneten Bremsorganen 56h, von welchen in Fig. 31 eines dargestellt ist. Es ist auch hier selbstverständlich, dass über den Umfang verteilt mehrere derartige Bremsorgane 56h vorgesehen sind oder sein können, insbesondere um Unwuchtprobleme im Rotationsbetrieb zu vermeiden.

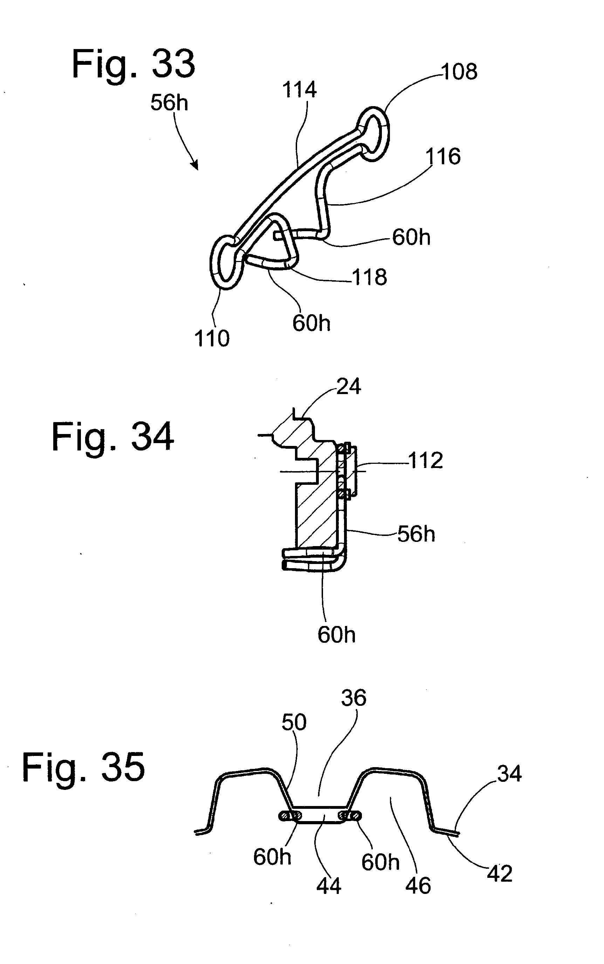

Das bzw. jedes derartige Verbindungsorgan 56h ist als Federbügel aus Drahtmaterial, vorzugsweise Federdrahtmaterial, gebogen, und zwar derart, dass es zwei in Umfangsrichtung gelegene Endbereiche mit jeweils ringartigen Befestigungsabschnitten 108, 110 bildet. Im Bereich dieser ringartigen Befestigungsabschnitte 108, 110 kann dann ein derartiges Bremsorgan 56h mit dem Zentralscheibenelement bzw. Bauteil 24 verbunden werden, beispielsweise durch Vernietung. Hierfür können, wie in Fig. 34 erkennbar, mit dem Bauteil 24 integral ausgebildete Nietabschnitte 112 dienen, die nach Aufstecken des Bremsorgans 56h umgeformt werden und somit dieses Bremsorgan 56h an seiner vom Bauteil 24 abgewandten Seite übergreifen. Die beiden Befestigungsabschnitte 108, 110 sind durch einen damit integral ausgestalteten Bügelabschnitt 114 verbunden. Die dann ebenfalls an die Befestigungsabschnitte 108, 110 anschließenden freien Endabschnitte 116, 118 des Befestigungsorgans 56h sind zum Bereitstellen zweier Bremselemente 60h so geformt, dass sie sich zunächst nach radial innen und dann axial erstrecken. Dabei ist die Erstreckung nach radial innen so gewählt, dass, wie in Fig. 32 deutlich erkennbar, die Bremselemente 60h eines Befestigungsorgans 56h radial innerhalb eines in Zuordnung zu diesem Befestigungsorgan 56h vorgesehenen Zahns 36 der Verzahnung 34 liegen und somit diesen Zahn 36 radial innen in Achsrichtung übergreifen. Ferner ist die Verzahnung 42 am Bauteil 40 so gestaltet bzw. dimensioniert, dass zumindest in denjenigen Zwischenräumen 44, in welchen die beiden Bremselemente 60h eines jeweiligen Bremsorgans 56h liegen, ausreichend Abstand zum radial inneren Ende eines in diesen Zwischenraum eingreifenden Zahns 36 der Verzahnung 34 besteht. Es ergibt sich somit die in den Fig. 32 und 35 dargestellte Konstellation, in welcher die Bremselemente 60h radial zwischen den beiden Bauteilen 24 und 40 liegen.

Ferner ist das Bremsorgan 56h so geformt, dass aufgrund seiner eigenen Elastizität die beiden Bremselemente 60h desselben in Umfangsrichtung so aufgespreizt sind, dass sie unter Vorspannung an den Flanken 50 der diese einschließenden Zähne 46 der Verzahnung 42 anliegen bzw. bei aufgrund des vorhandenen Umfangsbewegungsspiels zumindest in Anlage an diesen Flanken 50 kommen können. Da das Befestigungsorgan 56h am Bauteil 24 festgelegt ist, führt somit eine Relativumfangsbewegung zwischen den beiden Bauteilen 24 und 40 dazu, dass spätestens dann, wenn eines der Bremselemente 60h in Anlage an einem Zahn 46 kommt, eine weitere Relativumfangsbewegung nur entgegen der Vorspannwirkung des Bremsorgans 56h, also entgegen einer Rückstellkraft erfolgen kann. Diese bremst die Relativdrehbewegung und führt somit zu einer deutlich sanfteren gegenseitigen Berührung der beiden Verzahnungen 34, 42.

In dem Falle, in dem auch im unbelasteten Zustand die beiden Bremselemente 60h eines jeweiligen Bremsorgans 56h bereits in Anlage an den diese in Umfangsrichtung einschließenden Zähnen 46 sind, wird eine Umfangszentrierfunktion erlangt, die zur Folge hat, dass im lastfreien Zustand auftretende Drehmomentschwankungen bis zu einem bestimmten Niveau der Drehbeschleunigung abgefangen werden können, so dass ein Gegeneinanderschlagen der Verzahnungen 34 und 42 vollständig vermieden werden kann.

Es sei hier darauf hingewiesen, dass selbstverständlich eines oder mehrere derartiger Bremsorgane 56h auch am Bauteil 40 festgelegt sein könnte und mit seinen Bremselementen 60h an Zähnen 36 der Verzahnung 34 abgestützt sein könnte.

Durch die vorliegende Erfindung wird bei einer zwangsweise mit Umfangsbewegungsspiel behafteten Verzahnungsverbindung zwischen zwei Bauteilen, über welche im Antriebsstrang eines Fahrzeugs ein Drehmoment zu übertragen ist, dafür gesorgt, dass auftretende Lastwechsel bzw. Drehmoment- oder Drehzahländerungen durch Einführen einer Bremskraft zwischen den beiden Bauteilen nicht zu einem übermäßig starken Gegeneinanderschlagen der Verzahnung dieser Bauteile führen können. Diese Bremskraft kann, je nach Ausgestaltung der Bremsanordnung als Reibkraft wirken, kann als Rückstellkraft wirken, oder kann sowohl einen Reibkraftanteil als auch einen Rückstellkraftanteil enthalten.

## Patentansprüche

1. Verbindungsanordnung zur drehfesten Verbindung zweier Bauteile (24, 40) in einem Antriebsstrang eines Fahrzeugs zur gemeinsamen Drehung um eine Drehachse (A), umfassend an einem ersten der beiden Bauteile (24, 40) eine Innenverzahnung (34) und an einem zweiten der beiden Bauteile (24, 40) eine im Verbindungszustand mit der Innenverzahnung (34) in mit Umfangsbewegungsspiel behaftetem Kämmeingriff stehende Außenverzahnung (42), ferner umfassend eine zwischen dem ersten Bauteil (24) und dem zweiten Bauteil (40) wirkende Bremsanordnung (54), welche einer Relativdrehung der beiden Bauteile (24, 40) im Bereich des Umfangsbewegungsspiels entgegenwirkt.

2. Verbindungsanordnung nach Anspruch 1,
**dadurch gekennzeichnet, dass** die Bremsanordnung (54) eine der Relativdrehung entgegenwirkende Reibkraft als Bremskraft erzeugt oder/und eine der Relativdrehung entgegenwirkende Rückstellkraft als Bremskraft erzeugt.

3. Verbindungsanordnung nach Anspruch 1 oder 2,
**dadurch gekennzeichnet, dass** die Bremsanordnung (54) wenigstens ein bezüglich einem Bauteil vom ersten Bauteil (24) und zweitem Bauteil (40) festgelegtes und am anderen Bauteil von erstem Bauteil (24) und zweitem Bauteil (40) zur Erzeugung einer Bremskraft angreifendes Bremsorgan (56; 56a; 56b; 56c; 56d; 56e; 56f; 56g; 56h) umfasst.

4. Verbindungsanordnung nach Anspruch 3,
**dadurch gekennzeichnet, dass** das wenigstens eine Bremsorgan (56; 56a; 56b; 56c; 56d; 56e; 56f; 56g) wenigstens ein das andere Bauteil im Wesentlichen radial belastendes Bremselement (60; 60a; 60b; 60c; 60d; 60e; 60f; 60g) umfasst.

5. Verbindungsanordnung nach Anspruch 4,
**dadurch gekennzeichnet, dass** das Bremselement (60a) das andere Bauteil im Wesentlichen nach radial außen belastet.

6. Verbindungsanordnung nach Anspruch 4 oder 5,
**dadurch gekennzeichnet, dass** das wenigstens eine Bremselement (60; 60a; 60b; 60c; 60d) zwischen zwei Zähne (36; 46) der Verzahnung (34; 42) des einen Bauteils eingreift und das andere Bauteil an einer Radialstirnfläche (70; 74) eines Zahns (46; 36) seiner Verzahnung belastet.

7. Verbindungsanordnung nach Anspruch 3, 4 oder 5,
**dadurch gekennzeichnet, dass** das wenigstens eine Bremselement (60e; 60f; 60g; 60h) zwischen zwei Zähne (46; 36) der Verzahnung (42; 34) des anderen Bauteils eingreift und wenigstens einen dieser Zähne (46; 36) an einer Umfangsflanke (50; 48) belastet.

8. Verbindungsanordnung nach einem der Ansprüche 4 bis 7,
**dadurch gekennzeichnet, dass** das Bremsorgan (56; 56a; 56b; 56c; 56g) einen bezüglich des einen Bauteils festgelegten Ringkörper(58; 58a; 58b; 58c; 58g) umfasst, von welchem mehrere mit Umfangsabstand zueinander angeordnete Bremslaschen als Bremselemente (60; 60a; 60b; 60c; 60g) ausgehen.

9. Verbindungsanordnung nach Anspruch 8,
**dadurch gekennzeichnet, dass** der Ringkörper (58) wenigstens in denjenigen Bereichen bezüglich des einen Bauteils (24) festgelegt ist, in welchen die Bremslaschen (60) von dem Ringkörper (50) ausgehen.

10. Verbindungsanordnung nach Anspruch 8 oder 9,
**dadurch gekennzeichnet, dass** das Bremsorgan (56c) durch eine Lagerungsscheibe (32) bereitgestellt ist.

11. Verbindungsanordnung nach Anspruch 8 oder 9,
**dadurch gekennzeichnet, dass** das Bremsorgan (56b) durch ein Vorspannfederelement (33) bereitgestellt ist.

12. Verbindungsanordnung nach einem der Ansprüche 1 bis 7,
**dadurch gekennzeichnet, dass** eine Mehrzahl von in Umfangsrichtung in Abstand zueinander angeordneten Bremsorganen (56d; 56e; 56f; 56h) bezüglich des einen Bauteils festgelegt ist.

13. Verbindungsanordnung nach Anspruch 12,
**dadurch gekennzeichnet, dass** wenigstens eines der Bremsorgane (56e; 56f) in einem Umfangsmittenbereich bezüglich des einen Bauteils (24) festgelegt ist und in wenigstens einem Umfangsendenbereich das andere Bauteil (40) belastet.

14. Verbindungsanordnung nach Anspruch 12,
**dadurch gekennzeichnet, dass** wenigstens ein Bremsorgan (56d; 56h) in seinen Umfangsendbereichen bezüglich des einen Bauteils (24) festgelegt ist und in einem Umfangsmittenbereich das andere Bauteil (40) belastet.

15. Verbindungsanordnung nach einem der Ansprüche 12 bis 14,
**dadurch gekennzeichnet, dass** wenigstens ein Bremsorgan (56d) an dem einen Bauteil (24) durch Federklemmwirkung festgelegt ist und das andere Bauteil (40) reibend belastet.

16. Verbindungsanordnung nach einem der Ansprüche 3 bis 15,
**dadurch gekennzeichnet, dass** wenigstens ein Bremsorgan (56; 56a; 56b; 56c; 56e; 56f; 56g; 56h) durch vorzugsweise mit dem einen Bauteil integral ausgebildete Befestigungselemente (68; 72; 102) an diesem festgelegt ist.

17. Torsionsschwingungsdämpfer für einen Antriebsstrang eines Fahrzeugs, umfassend eine Primärseite (12) und eine Sekundärseite (14), wobei eine Seite von Primärseite (12) und Sekundärseite (14) eine mit der anderen Seite über Dämpferelemente (22) gekoppelte Zentralscheibe (24) umfasst, die vermittels einer Verbindungsanordnung (52) nach einem der vorangehenden Ansprüche mit einem Drehmomentübertragungselement (40) verbunden ist, wobei die Zentralscheibe (24) oder ein damit fest verbundenes Element das erste Bauteil und das Drehmomentübertragungselement (40) das zweite Bauteil bildet.
